# EUROPEAN PATENT APPLICATION

(11) **EP 4 804 038 A1**
(43) Date of publication of application: **09.09.2026**
(21) Application number: 25300016.0
(22) Date of filing: 05.03.2025
(51) Int. Cl.: G06F 12/0815, G06F 12/0888, G06F 12/0831

(54) **DATA PROCESSING NETWORK WITH A MULTI-CACHE HIERARCHY AND SUPPORT OF DIRECT DATA TRANSFERS**

(71) Applicant: ARM Limited, Cambridge CB1 9NJ (GB)
(72) Inventor: ZHANG, Wenxuan, Cambridge, CB1 9NJ (GB); KASERIDIS, Dimitrios, Cambridge, CB1 9NJ (GB)
(74) Representative: Dehns

(57) **Abstract**

Direct data transfer in a data processing network is enabled by passing a transfer request, containing a source identifier and transaction identifier of an initiating request node, through two or more levels of cache hierarchy to a completer node. This enables the complete node to communicate directly with the initiating request node, bypassing intermediate cache nodes. The transfer request may be a request for direct read transfer, direct cache transfer, or direct write transfer, for example.

## Description

### BACKGROUND

The complexity of data processing networks is increasing in terms of the number of network nodes and the number of networks links. This increase is driven, at least in part, by a need to support large computational and memory requirements. A network may use a system level cache (SLC) to reduce data access latency. In some current systems, the system level cache is distributed across a large set of home nodes in the network to share the cache capacity over all request nodes across multiple chips. The resulting networks, with large mesh dimensions for example, can exhibit large latencies for the data requests and associated snoop messages.

When a large network uses single level, distributed, system level cache, a large number of network hops may be needed to move data from a home node of the distributed system level cache to a processing node. This puts a lot of pressure on the transport layer of the network and introduces latency.

One approach to reducing latency and transport pressure relies on the use of direct data transfers, such as direct read transfers (DRTs), direct cache transfers (DCTs) and direct write transfers (DWTs), where transferred data skips one node. For example, data may be transferred between a request node and a subordinate node, bypassing a home node.

A second approach is the use of multi-level caching, where data can be stored at an intermediate cache node, closer to a processing node.

### BRIEF DESCRIPTION OF THE DRAWINGS

The accompanying drawings provide visual representations which will be used to describe various representative embodiments more fully and can be used by those skilled in the art to better understand the representative embodiments disclosed and their inherent advantages. In these drawings, like reference numerals identify corresponding or analogous elements.
**FIG. 1** is an abstracted view of a multi-chip data processing network, in accordance with various representative embodiments.
**FIG. 2** is a diagrammatic representation of an interconnect of a data processing network, in accordance with various representative embodiments.
**FIG. 3** is a diagrammatic representation of a populated cross-point of a data processing network, in accordance with various representative embodiments.
**FIG. 4** is a diagrammatic representation of a further populated cross-point of a data processing network, in accordance with various representative embodiments.
**FIG. 5** is a diagrammatic representation of an example matrix multiplication operation.
**FIG. 6** is a diagrammatic representation of a data processing network, in accordance with various representative embodiments.
**FIG. 7** is an abstracted view of a data processing network, in accordance with various representative embodiments.
**FIG. 8** is a further abstracted view of a data processing network, in accordance with various representative embodiments.
**FIG. 9** is a sequence diagram of a direct read transfer operation, in accordance with various representative embodiments.
**FIG. 10** is a table showing fields of a sequence of messages in a data processing network, in accordance with various representative embodiments.
**FIG. 11** is a table showing fields of a sequence of response messages, in accordance with various representative embodiments.
**FIG. 12** is a sequence diagram of a direct cache transfer operation, in accordance with various representative embodiments.
**FIG. 13** is a table showing fields of a sequence of messages in a data processing network, in accordance with various representative embodiments.
**FIG. 14** shows fields of reply or response messages in a data processing network, in accordance with various representative embodiments.
**FIG. 15** is a sequence diagram of a direct write transfer operation, in accordance with various representative embodiments.
**FIG. 16** is a table showing fields of a sequence of messages in a data processing network, in accordance with various representative embodiments.
**FIG. 17** shows fields of reply or response messages in a data processing network, in accordance with various representative embodiments.
**FIG. 18** is a sequence diagram of a direct write transfer operation, in accordance with various representative embodiments.
**FIG. 19** is a table showing fields of a sequence of messages in a data processing network, in accordance with various representative embodiments.
**FIG. 20** is a sequence diagram of a combined direct read transfer and direct cache transfer operation, in accordance with various representative embodiments.
**FIG. 21** is a table showing fields of a sequence of messages in a data processing network, in accordance with various representative embodiments.
**FIG. 22** shows fields of reply or response messages in a data processing network, in accordance with various representative embodiments

### DETAILED DESCRIPTION

Various embodiments of the disclosure relate to a data processing network with a multi-cache hierarchy and support of direct data transfers

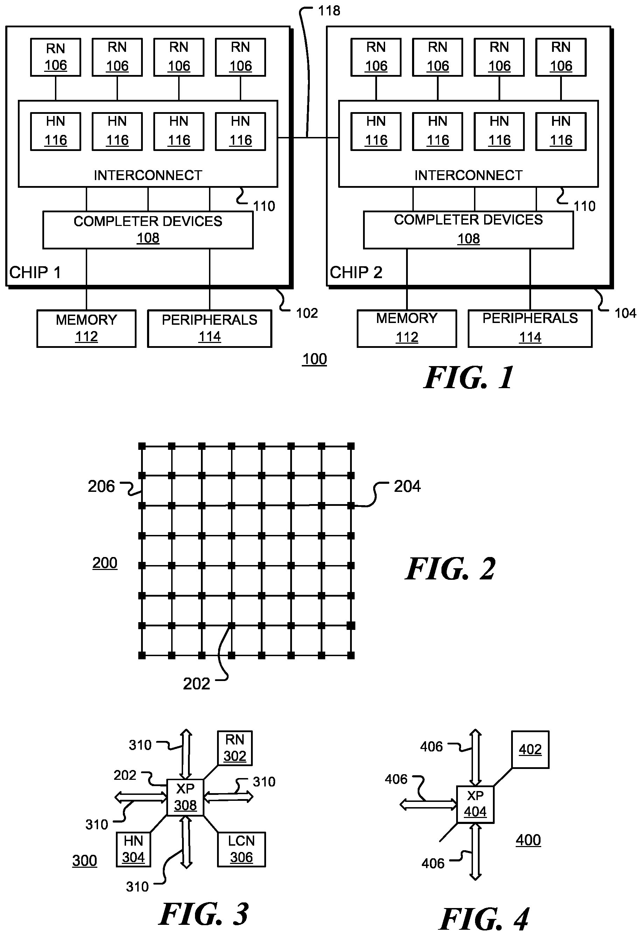

**FIG. 1** is an abstracted view of a multi-chip data processing network 100, in accordance with various representative embodiments. In the embodiment shown, data processing network 100 includes first chip or chiplet 102 and second chip or chiplet 104. A data processing network may include a single chip or multiple chips. Data processing network 100 includes multiple request nodes (RNs) 106 that access and process data. A request node (RN) can be Fully Coherent, input/output (I/O) Coherent, or I/O Coherent with Distributed Virtual Memory (DVM) support, for example. A Fully Coherent Request Node (RNF) contains coherent caches and will accept and respond to snoop messages. An I/O-Coherent Request Node (RNI) does not have a coherent cache, and cannot accept snoop messages. An I/O-Coherent Request Node with DVM support (RNI/D) has the same functionality as an RNI and can also accept DVM messages. A request node may be, for example, a central processing unit (CPU) core, a neural engine or other accelerator, or a Component Aggregation Layer that houses two or more CPU cores to be connected to one network port.

RNs 106 are coupled to each other and to completer devices 108 via an interconnect circuits 110 to form a network. A completer device 108 may be a memory controller, for example, which provides access to memory 112, or an interface to a peripheral device 114. A completer device may be a subordinate node of the network. A network may include a system level cache (SLC) to reduce the number of accesses to memory 112 and reduce the latency of data accesses. A system level cache may be distributed across a large set of home nodes 116 in a network to share the cache capacity over all network nodes and across multiple chips. In this approach, a cache line of data is uniquely mapped to a home node and all request nodes in the system access the same home node for accessing the data. A home node (HN) provides a point of coherency and serialization for a subset of system addresses and provides a cache for storing data associated with the addresses. Coherency maintenance may utilize a snoop filter (SF) that tracks the location and coherency state of data copied to caches in the network.

Chips 102 and 104 are coupled via chip-to-chip link 118.

**FIG. 2** is a diagrammatic representation of an interconnect 200 of a data processing network, in accordance with various representative embodiments. In the embodiment shown, the network is a mesh network. Interconnect 200 provides a number of cross-points (XPs) such as internal cross-point 202 and peripheral cross-point 204. Each cross-point provides one or more ports for coupling to nodes such as request nodes, home nodes and subordinate nodes. Data and messages are moved through a mesh network in a number of "hops" along transport links 206 between cross-points. While example interconnect 200 provides 64 cross-points, an interconnect may provide any number of cross-points. As the number of cross-points in a mesh network increases to support large computational and memory requirements, the probability of needing a large number of "hops" increases and the network becomes less efficient with higher latency for data requests and snoop messages.

While **FIG. 2** shows an interconnect of a mesh network, the present disclosure may be embodied in networks having other topologies, such as ring networks, bus networks, star networks, tree networks, etc., and combinations thereof.

**FIG. 3** is a diagrammatic representation of a populated cross-point 300 of a data processing network, in accordance with various representative embodiments. Populated cross-point 300 includes one or more RNs 302, HN 304 and local cache node (LCN) 306, all coupled to cross-point (XP) 308. Transport links 310 couple to neighboring cross-points. In one embodiment, transport links 310 include dedicated channels for requests, responses, write data and read data. In one embodiment, home node 304 and local cache node 306 are combined as a super home node. HN 304 provides a global home for some system addresses, while LCN 306 provides a secondary local home for some system addresses.

**FIG. 4** is a diagrammatic representation of a further populated cross-point 400 of a data processing network, in accordance with various representative embodiments. Populated cross-point 400 includes subordinate or completer node 402 coupled to cross-point (XP) 404. Transport links 406 couple to neighboring cross-points. Subordinate node (SN) 402 may be a memory controller, chip-to-chip bridge, or die-to-die bridge, for example.

With a large mesh network with a large number of request nodes (such as neural engines), the distance that data needs to move from a given static home node to all the request nodes that need that data can be significant. In addition, for every hop that the data makes on the mesh they consume a slot of data transfer. Therefore, the higher number of transfers and the greater distance the data has to transfer, the higher overall mesh transport layer bandwidth and power are consumed for moving the same portion of useful data.

In highly shareable workloads, the same data is accessed by multiple requestors. Prior designs assume a system cache hierarchy that can store and share the data. Such designs though put a lot of pressure on the transport layer to be able to move the same data to the multiple destinations in the same time period. Highly shareable workloads, which need to transfer the same data to multiple destinations, create a significant overhead for data processing architectures that feature a distributed system-level cache over multiple chips in a uniform memory access (UMA) architecture. Examples of such workloads are the matrix multiplications operations used in artificial intelligence (AI) workloads. In such workloads, the same sets of weight values and/or activation values are used, in the same short time-window, by processing cores at multiple destinations to perform AI operations including training, inferences and reductions.

In one embodiment, the destinations of the data are mapped to a two-dimensional array of Neural Engines (NE) in a chip. This benefits from a very high bandwidth transport layer that is able to service all these requests at the necessary rate to keep up with the NEs bandwidth requirements. The bandwidth may be in tens of Terabytes per second, for example.

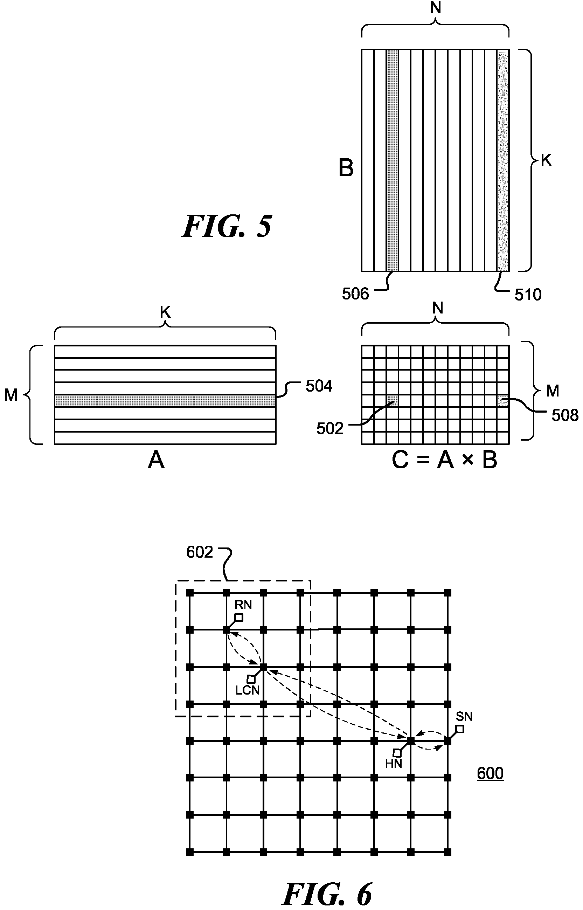

**FIG. 5** is a diagrammatic representation of an example matrix multiplication operation of matrix A (with M rows and K columns) by matrix B (with K rows and N columns) to produce output matrix C=A×B, having M rows and N columns. Different output elements in output matrix C may be computed in parallel by different processing cores or accelerators. For example, output element 502 in row *r* and column *c* of output matrix C may be determined by computing a dot product of the data in row *r* (504) of matrix A with the data in column *c* (506) of matrix B by a first processor. Similarly, output element 508 in row *r* and last column of output matrix C may be determined, in parallel, by computing a dot product of the data in row *r* (504) of matrix A with the data in the last column (510) of matrix B by another processor. Thus, both processors must access the data in row 502 of matrix A within a very short time period. Indeed, the data in row 502 are used by all processors computing output elements in row *r* of output matrix C (the row containing elements 502 and 508).

The present disclosure enables, for example, data in row 502 to be stored in the network close to the processors computing output elements in row *r* of output matrix C.

Without a data processing micro-architecture that takes advantage of the temporal and spatial locality of the data, the bandwidth requirements of such workloads are impractically high and force designers to seek solutions that require significantly increased on-chip area and power for the overall data processing system (which may be a System-On-Chip (SoC) for example). This area and power could be better used by adding more processing cores, such as NEs, to increase the overall data processing throughput. Finally, since the level of sharing of data and access patterns are highly dependent on the particular workload being executed, it is important for a solution to be configurable, at least at boot time, to allow for the design to be adapted to the expected workload behaviors.

An embodiment of the present disclosure provides a mechanism for organizing a configurable multi-level cache hierarchy in a data processing network that is optimized for shareable workloads, with the target of maximizing the overall mesh throughput and minimizing data request latencies. This enables the number of matrix multiplication operations per second to be maximized, for example. A configurable multi-level cache hierarchy utilizes Local Cache Domains (LCDs) to bring shared data only once from the memory and store it in a cache close to the processing elements that are using the data. The cache may be distributed across a number of local cache nodes (LCNs), for example.

**FIG. 6** is a diagrammatic representation of a data processing network 600, in accordance with various representative embodiments. Network 600 includes a sub-network 602, indicated by the broken lines, that functions as a local cache domain (LCD) for a set of addresses.

In operation, when executing a workload, request node RN processes data retrieved from subordinate node SN, which may be a memory controller, chip-to-chip bridge, or die-to-die bridge, for example. In prior networks, data from subordinate node SN would be accessed via home node HN, which acts as a point of coherency and serialization for the data address. In the simple example shown in **FIG. 6****,** home node HN is 8 hops away from request node RN. As discussed above, other request nodes may process the same data in parallel. In accordance with an embodiment of the disclosure, network 600 is configured to include sub-network 602 that includes request nodes that process the same data in parallel. Local cache node LCN within the sub-network is configured to provide a local home for data associated with the addresses. Request nodes in sub-network 602 can access the data from local cache node LCN in an average of two hops and a maximum of four hops. A local cache domain (LCD) is configured by associating a set of addresses in a memory of the data processing network with one or more local cache nodes in a sub-network of the data processing network. The sub-network is configured by designating a set of one or more request nodes or a set of cross-points. The LCN provides a secondary home, since addresses in the set of addresses are also accessible via home nodes of the data processing network, which may be outside of the sub-network.

Based on a first address in the set of addresses of the local cache domain, a local cache node in the sub-network is identified, and a data transfer request associated with the first address is routed from the RN to the local cache node associated with the data address. However, for a request node not in the sub-network, or for a second address not in the set of addresses, a data transfer request associated with the second address is routed from the second RN to the HN of the data processing network associated with the second address. For example, while a first read request may have to access data via the LCN, HN or the SN, subsequent requests, from request nodes working in parallel, can retrieve the data from the LCN.

More generally, a data processing network is partitioned into N local cache domains (LCD) that act as local cache hierarchies of data that is accessed by M grouped request nodes. A RN in one LCD, will first perform an access/lookup to an LCN in the same LCD for the data. If they do not find the data, the LCD will send a request to the associated HN.

The same idea can be generalized to a network that it implemented across multiple chips that are connected together over chip-to-chip links.

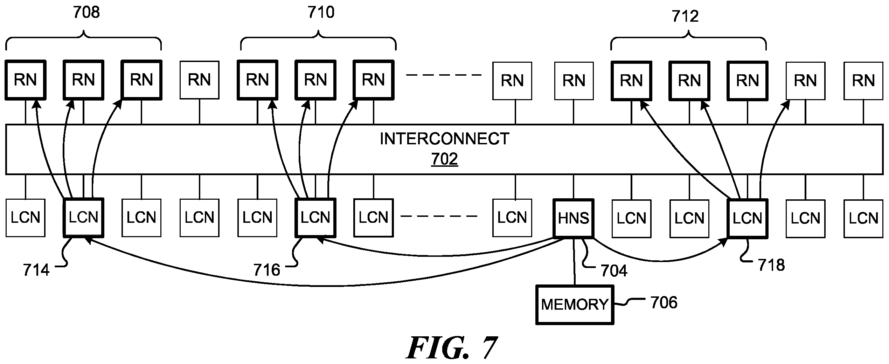

In one embodiment, the use of local cache domains enables efficient mapping of matrix multiplication operations at neural engines by moving data to the LCNs that are physically closer to the RNs (a neural engine (NE) in this example) that need the data. This avoids transferring multiple copies of data to each NE from the HN and/or memory. An example mapping is shown in **FIG. 7****,** illustrating that the number of times data are transferred from the HN and the memory to each NE is minimized.

**FIG. 7** is an abstracted view of a data processing network 700, in accordance with various representative embodiments. Data processing network 700 includes a number of request nodes RN coupled via interconnect 702 to home node 704. Home node 704 is a point of coherency for a set of data addresses in memory 706 and serves as part of a system level cache. Data processing network 700 is configured to include a first sub-network containing request nodes 708, a second sub-network containing request nodes 710, and a third sub-network containing request nodes 712. Each sub-network is associated with a set of data addresses to form a local cache domain. The network may be configured at boot time, for example. The configuration may be selected based, at least in part, on the workload to be executed. For example, when executing the workload, request nodes 708 may access the same data in parallel. When a request node 708 in the first sub-network accesses data associated with the local cache domain, requests are sent to local cache node (LCN) 714. request nodes 708 are closer (in terms of network hops) to LCN 714 than to home node 704. If the requested data is not already cached at local caching node 714, the data is retrieved from home node 704 or from memory 706 via home node 704, and may be cached at LCN 714 ready for requests from other request nodes 708. Similarly, request nodes 710 request data from LCN 716 and request nodes 712 request data from LCN 718.

A benefit of the LCD approach is that it provides local sharing of data, either from the same chip or from remote chips, and removes the need to travel multiple times to physically distant home nodes HN (on the same chip or a different chip) for the highly sharable data. In one embodiment, hierarchical sharing of data between LCDs is provided, either through home nodes or with direct LCD-to-LCD data transfers. Data is dynamically replicated across only the LCDs that requested the data.

A further benefit of the LCD approach is that the size and location of the LCDs are configurable to match the data sharing patterns of the workload.

A further benefit of the LCD approach is that it enables hierarchical tracking of coherency in the Snoop Filters (SF). This removes the pressure of tracking all request nodes in the system across multiple chips. The SF of the home node, for example, may track local cache domains or local cache nodes rather than individual RNs.

A still further benefit of the LCD approach is that an LCN and a HN can be overlapped in the same physical node, referred to a super home node (HNS).

While the particular embodiments described herein relate to a single level of LCD, a fifth benefit of the LCD approach is that it can be scaled in multiple levels of LCDs between request nodes and homes nodes.

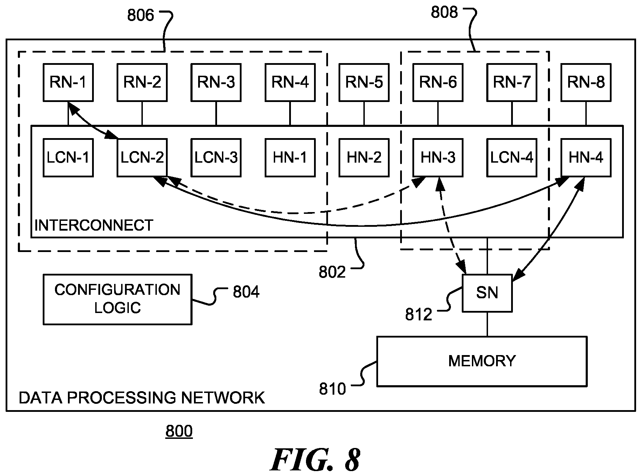

**FIG. 8** is an abstracted view of a data processing network 800, in accordance with various representative embodiments. **FIG. 8** illustrates an access pattern for a read operation that misses in both levels of a two-level hierarchy and reads the data from the memory. Data processing network 800 includes request nodes RN-1 to RN-8, local cache nodes LCN-1 to LCN-4 and home nodes HN-1 to HN-4. A node may function as both an LCN and an HN. The nodes are coupled by interconnect 802. In general, a data processing network includes a plurality of request nodes (RNs), one or more home nodes (HNs), one or more local cache nodes (LCNs), and an interconnect that couples the RNs, the one or more HNs and the one or more LCNs. Data processing network 800 includes configuration logic 804 that is programmable to define one or more local cache domains (LCDs). The example shown in **FIG. 8** includes LCD 806 and LCD 808. Each LCD associates a set of addresses in a memory, such as memory 810, with one or more LCNs in a sub-network of the data processing network and identifies a set of one or more RNs in the sub-network. For example, LCD 806 includes LCN-1, LCN-2 and LCN-3 together with RN-1, RN-2, RN-3 and RN-4. LCD 808 includes LCN-4 together with RN-6, RN-7, RN-8. The set of addresses of an LCD may be accessible via HNs that are inside or outside of the sub-network. For a first RN in the set of one or more RNs, RN-1 say, and a first address in the set of addresses, the interconnect is configured to determine, based on the first address, which LCN is associated with the first address, and to send a data transfer request associated with the first address from the first RN to the LCN. In contrast, for a second RN and a second address, when the second RN is not in the set of RNs (such as RN-6) or the second address not in the set of addresses, the interconnect is configured to determine, based on the second address, an HN of the data processing network associated with the second address and send a data transfer request associated with the second address from the second RN to the HN associated with the second address. In **FIG. 8****,** for a first address mapped to LCN-2, request node RN-1 requests data from LCN-2. If the first address does not hit in the snoop filter of LCN-2, LCN-2 requests the data from HN-3. If the first address does not hit in the snoop filter of HN-3, HN-3 requests the data from memory 810 via memory controller 812. When the first address hits in the snoop filter of HN-3, the data is retrieved from a cache in accordance with a presence vector of the snoop filter. The data is transferred to LCN-2 and may be stored in a cache of LCN-2. Subsequently, when any of request nodes RN-2 to RN-4 requests the same data, they also request data from LCN-2, and the data is available (either from the cache of LCN-2 or from a cache of an RN in the local cache domain) without having to retrieve from HN-3 or memory. If any of request nodes RN-5 to RN-8 request data associated with the first address, the request is sent directly to HN-3. For a second address in the LCD, when the requested data is not stored in a cache of LCN-2, LCN-2 requests the data from HN-4, which is associated with the second address. For a third data address, not in the LCD, RN-2 requests the data from home node associated with the third address.

As described above, an LCN and an HN may be combined in a super home node (HNS).

An LCN in an LCD may include a snoop filter that tracks coherency for the set of one or more RNs in the LCD. An HN outside of the sub-network may include a snoop filter that tracks coherency for the one or more LCDs.

In one embodiment the data processing network is implemented in a single integrated circuit chip. In a further embodiment, The data processing network spans multiple integrated circuit chips.

The LCDs may be configured as a hierarchy of LCDs.

The use of LCDs enables workloads with shared data, such as matrix multiplication operations, to be mapped to request nodes, such as Neural Engines (NEs) that are closer to the data. The data are stored in an LCD cache, which is distributed across the one or more LCNs in the LCD, and are physically closer to the NEs that need the data. This avoids transferring copies of the data to each NE from associated HN and/or memory.

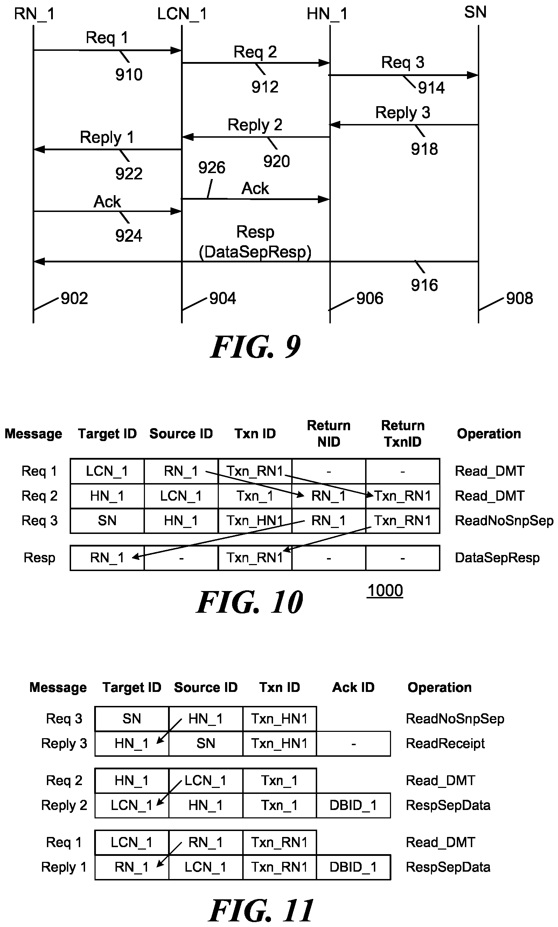

**FIG. 9** is a sequence diagram of a direct read transfer operation, in accordance with various representative embodiments. The sequence diagram shows timeline 902 for a first request node (RN_1), timeline 904 for a first intermediate cache node (LCN_1), timeline 906 for a home node (HN_1), and timeline 908 for a subordinate node (SN). This example relates to a two-level cache hierarchy, but the mechanism may be used for any number of levels. First transfer request 910 (Req 1) includes a source identifier and transaction identifier of the first request node. Responsive to receiving first transfer request 910 at the first intermediate cache node of the data processing network, second transfer request 912 (Req 2) is sent to the home node. Second transfer request 912 includes the source identifier and transaction identifier of the first request node. Responsive to receiving second transfer request 912, the home node sends third transfer request 914 (Req 3) to a completer node of the data processing network. Third transfer request 914 also includes the source identifier and transaction identifier of the first request node. In this example, the completer node is a subordinate node of the data processing network. In other instances, the completer node may be a second request node of the data processing network. Responsive to receiving third transfer request 914, the subordinate node sends response message 916 (Resp) to the first request node, bypassing both the home node and the first intermediate cache node. Response message 916 includes the transaction identifier of the first request node and, as a target identifier, the source identifier of the first request node. Response message 916 is routed in the interconnect based on the source identifier of the first request node as a target identifier.

In one embodiment, second transfer request 912 includes a source identifier and transaction identifier of the first intermediate cache node and third transfer request 914 includes a source identifier and transaction identifier of the home node. The subordinate node sends reply 918 (such as read receipt) to the home node. Reply 918 (Reply 3) includes the transaction identifier of the home node to enable to home node to associate the reply with request 914 and acknowledges receipt of the request. Similarly, the home node sends reply 920 (Reply 3) to the intermediate cache node. This reply acknowledges receipt of request 912 and indicates that the requested data will be sent to the request node in a separate message. Reply 920 includes the transaction identifier of the first intermediate cache node, to enable the first intermediate node to associate the reply with request 912.

Similarly, the first intermediate node sends reply 922 (Reply 1) to the first request node. This reply acknowledges receipt of request 910 and indicates that the requested data will be sent to the request node in a separate message. Reply 920 includes the transaction identifier of the first request node, to enable the first request node to associate the reply with request 910.

Acknowledgement of completion message 924 may be sent from the first request node to the first intermediate node, and acknowledgement of completion message 926 may be sent from the first intermediate node to the home node. These messages enable the nodes to release resources (such as transaction tracking resources) employed for the data transfer.

**FIG. 10** is a table 1000 showing fields of a sequence of messages in a data processing network, in accordance with various representative embodiments. The messages correspond with those shown in **FIG. 9****,** discussed above. The fields include an identifier of the destination node of the message node (Target NID), an identifier of the message source node (Source NID), a transaction identifier (TxnID) usually generated by the source node, a return node identifier (Return NID) that identifies the initiator (request node) of the data transfer transaction, and a return transaction identifier (Return TxnID). A message will contain additional fields, not shown here, such as fields to contain operation codes and payloads. Referring to table 1000, message "Req 1" (910 in **FIG. 9**) is sent from request node RN_1 to intermediate cache node LCN_1 with transaction identifier "Txn_RN1." The message requests a direct read transfer (DRT) operation. Message "Req 2" (912 in **FIG. 9**) is sent from intermediate cache node LCN_1 to home node HN_1 with transaction identifier "Txn_1." For example, in the Arm^{®} AMBA^{®} 5 CHI protocol of Arm Limited (hereafter "CHI"), the Req 1 and Req 2 requests may be "ReadNotSharedDirty" requests. In accordance with the present disclosure, the Return NID field of Req 2 is set to the node identifier (RN_1) of the request node and the Return TxnID field is set to the transaction identifier Txn_RN1. The arrows in **FIG. 10** indicate where data is copied from one message to another. Message "Req 3" is sent from home node HN_1 to subordinate node SN. In the CHI protocol, Req 3 may be a "ReadNoSnpSep" request, for example. The Return NID field of Req 3 is set to the node identifier (RN_1) of the request node and the Return TxnID field is set to the transaction identifier Txn_RN1. In this manner, the node and transaction identifiers of the request node are passed to the subordinate node. This enables the subordinate node to send the response (Resp) directly to the request node, bypassing both the home node and the intermediate node. The transaction identifier and the target node identifier are obtained from message Req 3, as indicated by the arrows in **FIG. 10****.** Thus, in contrast to prior techniques, the response is able to bypass more than one level of cache hierarchy. In the CHI protocol, for example, the response may be a "DataSepResp" message that contains the requested data. The message indicates that replies will be sent to the intermediate and home node separately from the data.

**FIG. 11** shows fields of a sequence of response messages, in accordance with various representative embodiments. Referring to **FIG. 11****,** the message "Reply 3" (918 in **FIG. 9**) is sent by the subordinate node to the home node in response to Req 3. The transaction identifier Txn_HN1 is obtained from Req 3. In the CHI protocol, this may be a "ReadReceipt" message, for example. Message "Reply 2" (920 in **FIG. 9**) is sent by the home node to the first intermediate node in response to Req 2. The transaction identifier Txn_1 is obtained from Req 2, as is the target for the reply. In the CHI protocol, this may be a "RespSepData" message, for example. Message "Reply 1" (922 in **FIG. 9**) is sent by the first intermediate node to the first request node. The transaction identifier Txn_RN1 is obtained from Req 1, as is the target for the reply. In the CHI protocol, this may also be a "RespSepData" message.

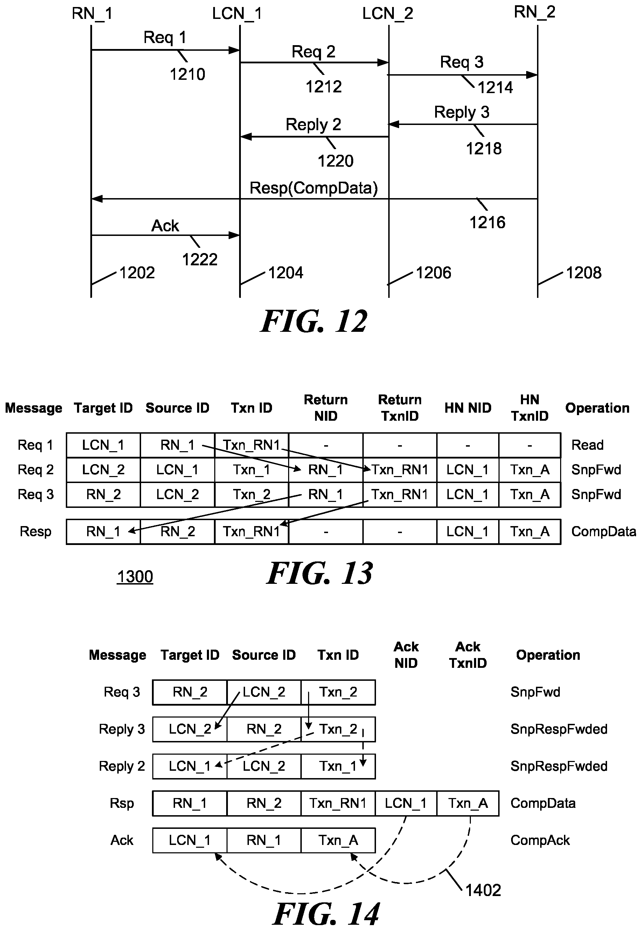

**FIG. 12** is a sequence diagram of a direct cache transfer operation, in accordance with various representative embodiments. The sequence diagram shows timeline 1202 for a first request node (RN_1), timeline 1204 for a first intermediate cache node (LCN_1), timeline 1206 for a second intermediate cache node (LCN_2), and timeline 1208 for a second request node (RN_2). Read request 1210 (Req 1) is sent from the first request node (RN_1) to the first intermediate cache node. In this example, the request produces a hit in the snoop filter of the first intermediate cache node, indicating the presence of the requested data in a cache domain of the second intermediate cache node. Accordingly, the first intermediate node sends snoop request 1212 to the second intermediate cache node. The snoop filter of the second intermediate cache node indicates presence of the data in a cache of the second request node, RN_2. The second intermediate cache node sends snoop request 1214 to second request node. Both snoop requests include the return node identifier and transaction identifier for the first request node. The second request node sends the requested data directly to the first request node in response 1216, bypassing the first and second intermediate cache nodes.

Replies 1218 and 1220 may be used to signal receipt and response to corresponding requests, as discussed below with respect to **FIG. 13****.**

In accordance with an embodiment of the disclosure, the first intermediate cache node includes its own identifier and transaction number in snoop request 1212. This is passed to the second request node in snoop request 1214. In turn, this is passed to the first request node in response 1216. This information is used by the first request node to acknowledge receipt of the requested data to the first intermediate cache node in acknowledgement message 1222.

**FIG. 13** is a table 1300 showing fields of a sequence of messages in a data processing network, in accordance with various representative embodiments. The messages correspond with those shown in **FIG. 12****,** discussed above. The node identifier (RN_1) and transaction identifier (Txn_RN1) of the first request node are included in the Req 2 and Req 3 snoop messages in the "Return NID" and "Return TxnID" fields, respectively. This information is used by the completing node (the second request node) to send the request data to the first request node, bypassing the intermediate cache nodes. The transaction identifier enables the first request node to associate the data with the original request. In addition, the node identifier (LCN_1_ and transaction identifier (Txn_A) of the first intermediate node are included in the "HN NID" and "HN TxnID" fields of Req 2 and Req 3.

In the CHI protocol, Req 1 may be a "ReadNotSharedDirty" request, Req 2 and Req 2 may be "ReadNotSharedDirtyFwd" requests, indicating that the data will be forwarded directly to the requester. However, in accordance with the present disclosure, the requests include additional fields the "HN NID" and "HN TxnID." The Resp message may be a "CompData_SC" message, for example, indicating completion and that the data is in a shared clean coherency state.

**FIG. 14** shows fields of reply or response messages in a data processing network, in accordance with various representative embodiments. The messages correspond with those shown in **FIG. 12****,** discussed above. Referring to **FIG. 14****,** the Reply 3 message (1218 in **FIG. 12**) is sent from the second request node to the second intermediate cache node in response the snoop request Req 3. The transaction identifier Txn_2 is copied from Req 3. Reply 2 (1220 in **FIG. 12**) is sent from the second intermediate cache node to the first intermediate cache node. The transaction identifier Txn_2 may be used to access a transaction table to determine the original requester (LCN_1) and transaction identifier (Txn_1), as indicated by the broken line arrows. The Ack message (1222 in **FIG. 12**) is sent to the first intermediate cache node in response to Resp message (1216 in **FIG. 12**) and includes the transaction identifier Txn_A that was originally generated by the first intermediate cache node and passed to the first request node in the Resp (CompData) message from the second request node (as indicate by broken-line arrow 1402). This signals the end of the transaction and enables the first intermediate cache node to update its snoop filter to show presence of the data at the first request node (RN_1).

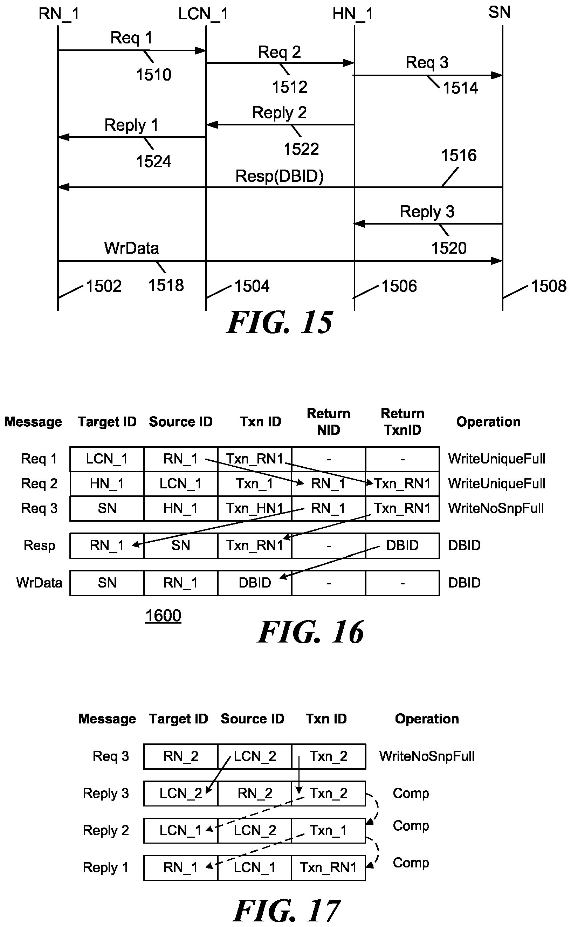

**FIG. 15** is a sequence diagram of a direct write transfer operation, in accordance with various representative embodiments. The sequence diagram shows timeline 1502 for a first request node (RN_1), timeline 1504 for a first intermediate cache node (LCN_1), timeline 1506 for a home node (HN_1), and timeline 1508 for a subordinate (SN). Write request 1510 is sent from the first request node (RN_1) to the first intermediate cache node (LCN_1). First transfer request 1510 (Req 1) includes the source identifier and a transaction identifier of the first request node. Responsive to receiving first transfer request 1510 at the first intermediate cache node of the data processing network, second transfer request 1512 (Req 2) is sent to the home node. In this example, the first transfer request is a direct write transfer request. Second transfer request 1512 includes the source identifier and transaction identifier of the first request node. Responsive to receiving second transfer request 1512, the home node sends third transfer request 1514 (Req 3) to the subordinate node. Third transfer request 1514 also includes the source identifier and transaction identifier of the first request node. Responsive to receiving third transfer request 1514, the subordinate node sends response message 1516 (Resp) to the first request node, bypassing both the home node and the first intermediate cache node. Response message 1516 includes the transaction identifier of the first request node and, as a target identifier, the source identifier of the first request node. Response message 1516 is routed in the interconnect based on the source identifier of the first request node as a target identifier. Response message 1516 also includes a data buffer identifier (DBID) of the subordinate node and signals that to the first request node that the subordinate is ready to receive the write data from the first request node. The write date is sent directly to the subordinate node in message 1518 (WrData).

In one embodiment, reply messages 1520, 1522 and 1524 are completion messages indicating completion of the various stages of the write transaction.

**FIG. 16** is a table 1600 showing fields of a sequence of messages in a data processing network, in accordance with various representative embodiments. The messages correspond with those shown in **FIG. 15****,** discussed above. Original message Req 1 (1510 in **FIG. 15**) is directed to the first intermediate node (LCN_1) and includes a transaction identifier (Txn_RN1) of the first request node. This transaction identifier, together with the node identifier (RN_1) of the first request node are passed in message Req 2 to the home node, and in Req 3 to the subordinate node. In the CHI protocol, the messages may be "WriteUniqueFull" messages, for example. The response message "Resp" (1516 in **FIG. 15**) includes a data buffer identifier (DBID) of the subordinate node that signals that the subordinate is ready to receive the write data from the first request node. The first request node sends the write date is sent directly to the subordinate node in message "WrData." This message includes the write data and the DBID provided by the subordinate node.

**FIG. 17** shows fields of reply or response messages in a data processing network, in accordance with various representative embodiments. The messages correspond with those shown in **FIG. 15****,** discussed above. In this example, the subordinate node, the home node and the first intermediate cache node all send completion messages (Reply 3, Reply2 and Reply 1, respectively) indicating the completion of requested operations. The transaction identifiers are used to match replies to previous requests. The broken-line arrows indicate where a transaction identifier is used to access a transaction table, for example, to retrieve associated request information.

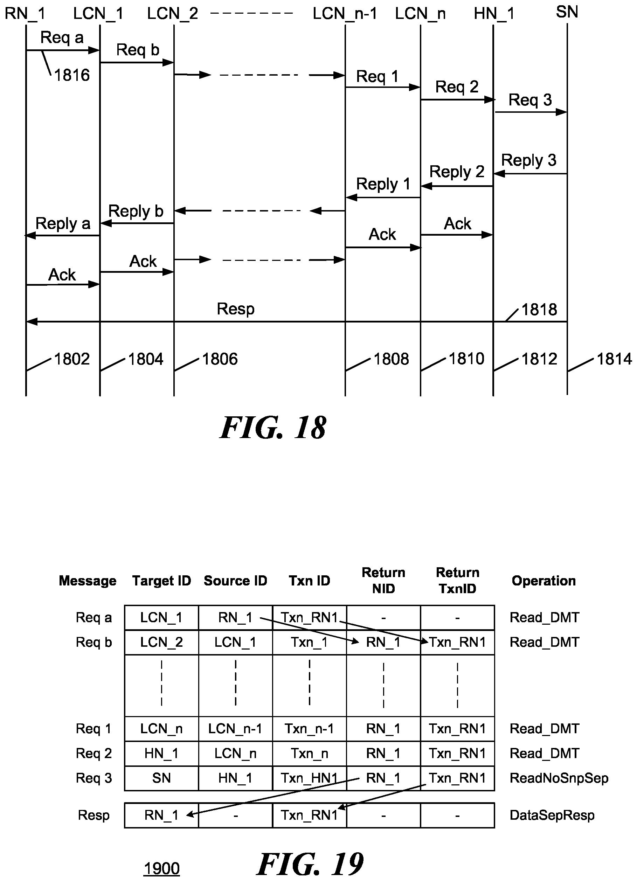

**FIG. 18** is a sequence diagram of a direct read transfer operation, in accordance with various representative embodiments. The sequence diagram shows timeline 1802 for a first request node (RN_1), timelines 1804, 1806, 1808 and 1810 for *n* intermediate cache nodes (LCN_1 to LCN_n, respectively), timeline 1812 for a home node (HN_1), and timeline 1814 for a subordinate node (SN). Direct transfer request 1816 (Req a) is sent from the first request node (RN_1) to the first intermediate cache node (LCN_1). The request is transferred, via the other intermediate cache nodes, to home node HN_1, and finally, via Req 3, to the subordinate node. The transferred requests all include the node identifier and transaction identifier of the request node in addition to node and transaction identifiers of the source intermediate node. This enables the subordinate node to response directly to the request node in data response 1818. In a corresponding manner to that described above, target nodes may reply to incoming requests and signal completion of requested operations in acknowledgement messages. In this manner, direct data transfer is enabled in a data processing networks having any number of layers in a cache hierarchy.

**FIG. 19** is a table 1900 showing fields of a sequence of messages in a data processing network, in accordance with various representative embodiments. The messages correspond with those shown in **FIG. 18****,** discussed above. The fields includes an identifier of the destination node of the message node (Target NID), an identifier of the message source node (Source NID), a transaction identifier (TxnID) usually generated by the source node, a return node identifier (Return NID) that identifies the initiator (request node) of the data transfer transaction, and a return transaction identifier (Return TxnID). A message will contain additional fields, not shown here. Referring to table 1900, message "Req a" (1816 in **FIG. 18**) is sent from request node RN_1 to intermediate cache node LCN_1 with transaction identifier "Txn_RN1." In this example, the message is a direct read transfer (DRT) operation. Message "Req 2" (1818 in **FIG. 18**) is sent from intermediate cache node LCN_1 to intermediate cache node LCN_2 with transaction identifier "Txn_1." In accordance with the present disclosure, the Return NID field of Req 2 is set to the node identifier (RN_1) of the request node and the Return TxnID field is set to the transaction identifier Txn_RN1. Similar messages are sent between intermediate cache nodes at each level of the cache hierarchy until the message reaches to last level, which is the home node for the requested data. For example, in the CHI protocol, the messages may be "ReadNotSharedDirty" requests. The arrows in **FIG. 19** indicate where data is copied from one message to another. Message "Req 3" is sent from home node HN_1 to subordinate node SN. In the CHI protocol, Req 3 may be a "ReadNoSnpSep" request, for example. The Return NID field of Req 3 is set to the node identifier (RN_1) of the request node and the Return TxnID field is set to the transaction identifier Txn_RN1. In this manner, the node and transaction identifiers of the request node are passed to the subordinate node. This enables the subordinate node to send the response (Resp) directly to the request node, bypassing both the home node and the intermediate node. The transaction identifier and the target node identifier are obtained from Req 3, as indicated by the arrows in **FIG. 19****.** Thus, in contrast to prior techniques, the response is able to bypass multiple levels of cache hierarchy. In the CHI protocol, for example, the response may be a "DataSepResp" message that contains request data. The message indicates that replies will be sent to the intermediate and home node separately from the data.

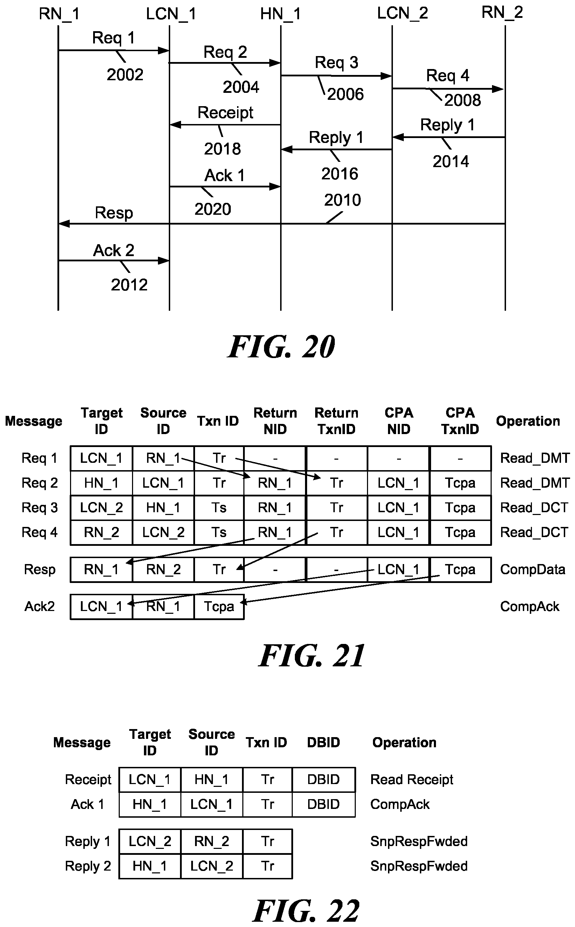

**FIG. 20** is a sequence diagram of a combined direct read transfer (DRT) and direct cache transfer (DCT) operation, in accordance with various representative embodiments. The sequence diagram shows timelines for a request node RN_1, local cache nodes LCN_1 and LCN_2, home node HN_1 and snoop target RN_2. In this embodiment, request node RN_1 sends DRT request 2002 to a first local cache node (LCN_1). LCN_1 sends DRT request 2004 to home node HN_1. The home node recognizes, from its snoop filter, that a copy of the requested data is present in a cache of node a node in the domain of local cache node LCN_2. Instead of requesting a direct transfer from memory, the home node sends a DCT request 2006 to LCN_2 that, in turn, identifies RN_2 as having the data and sends DCT request 2008 to RN_2. Requests 2002, 2004, 2006 and 2008 include identifiers of RN_1 and a transaction identifier. This enables RN_2 to send the data directly to the original requestor (RN_1) in CompData message 2010. On receipt of the data, RN_1 sends completion acknowledgement 2012 to LCN_1, to enable coherence update. Reply messages 2014 and 2016 indicate that the data has been forwarded directly to the original requestor. Home node HN_1 may send read receipt 2018 to LN_1, which LCN_1 acknowledges in message 2020.

**FIG. 21** is a table showing fields of a sequence of messages in a data processing network, in accordance with various representative embodiments. LCN_1 adds the return node identifier (RN_1) and transaction identifier (Tr) to message Req 2. LCN_1 also adds its own node identifier (LCN_1) and a transaction identifier (Tcpa) to Req 2, to indicate where the completion acknowledgement from the original requestor should be sent. This information is passed to RN_2 in requests Req 2, Req 3 and Req 4 and then to RN_1 in CompData response 2010. The information in the CompData response 2010 is used by RN_1 to generate and direct the completion acknowledgement message 1212.

**FIG. 22** shows fields of reply or response messages in a data processing network, in accordance with various representative embodiments. Read receipt 2018 includes a transaction identifier (DBID) generated by HN_1. This identifier is used in acknowledgement 2020 to enable it to be matched to the read receipt. Replies Reply 1 (2014) and Reply 2 (2016) include the original transaction identifier and indicate to intermediate nodes that the data has been forwarded directly to the request node.

The embodiments described herein are combinable. Embodiments of the disclosure include:
1. A data processing network comprising a plurality of nodes coupled by an interconnect, the plurality of nodes including:
   one or more request nodes;
   a hierarchy of cache nodes including one or more home nodes and one or more intermediate cache nodes; and
   one or more subordinate nodes;

   where a first request node of the one or more request nodes is operable to initiate a direct transfer of data;
   where a first intermediate cache node of the one or more intermediate cache nodes is configured to:
      receive a first transfer request for the direct transfer of data, the first transfer request including a source identifier and transaction identifier of the first request node; and
      send a second transfer request to a home node of the one or more home nodes, the second transfer request including the source identifier and transaction identifier of the
      first request node;
   where the home node is configured to:
      receive the second transfer request; and
      send a third transfer request to a completer node, the third transfer request including the source identifier and transaction identifier of the first request node, where the completer node is a subordinate node of the one or more subordinate nodes or a
      second request node of the plurality of request nodes;
   where the completer node is configured to:
      send a response message, responsive to the third transfer request, to the first request node, bypassing the home node and the first intermediate cache node, the response message including the transaction identifier of the first request node and, as a target
      identifier, the source identifier of the first request node; and
   where the response message is routed in the interconnect based on the source identifier of the first request node as the target identifier.
2. The data processing network of embodiment 1, where:
   the third transfer request includes a source identifier and transaction identifier of the home node, and the completer node is configured to send an acknowledgement message to the home node, acknowledgement message including the transaction identifier of the home node; and
   the second transfer request includes a source identifier and transaction identifier of the first intermediate cache node, and the home node is configured to send an
   acknowledgement message to the intermediate cache node, the acknowledgement message including the transaction identifier of the first intermediate cache node.
3. The data processing network of embodiment 1, where the first transfer request is received from the first request node.
4. The data processing network of embodiment 1, where the first transfer request is received via one or more second intermediate cache nodes of the data processing network.
5. The data processing network of embodiment 1, where:
   the first transfer request is a direct read request for data associated with an address, and
   the response message includes data associated with the address.
6. The data processing network of embodiment 1, where the first transfer request is a direct read transfer request and the completer node is the subordinate node.
7. The data processing network of embodiment 1, where the first transfer request is a direct cache transfer request received from the first request node, and the completer node is the second request node.
8. The data processing network of embodiment 7, where:
   the first request node is operable to initiate the direct transfer of data by sending an initial direct cache transfer request to an initial intermediate cache node of the one or
   more intermediate cache nodes; and
   the second and third transfer requests, and the response message, include a source identifier and transaction identifier of the initial intermediate node; and
   the first request node is configured to send a completion acknowledgement message to the initial intermediate node, the completion acknowledgement message including the transaction identifier of the initial intermediate node and, as a target identifier, the source identifier of the initial intermediate node.
9. The data processing network of embodiment 1, where:
   the first transfer request is a direct write transfer request for data associated with an address;
   the completer node is the subordinate node; and
   the response message signals availability of the subordinate node to receive the data associated with the address from the first request node.
10. The data processing network of embodiment 1, where the second transfer request is a direct read transfer request and the third transfer request is a direct cache transfer to the second request node, where:
   the first intermediate node is further configured to add a node identifier and a transaction identifier for completion to the second transfer request;
   the home node is further configured to identify the second request node from a snoop filter and add the node identifier and transaction identifier for completion to the third transfer request;
   the second request node is further configured to add the node identifier and
   transaction identifier for completion to the response message; and
   the request node is further configured to send a completion acknowledgement message to the first intermediate node based on the node identifier and transaction identifier for completion to the second transfer request in response to receiving the response message.
11. A method of data transfer in a data processing network including a plurality of nodes coupled by an interconnect, the method comprising:
   responsive to receiving a first transfer request at a first intermediate cache node of the data processing network, the first transfer request including a source identifier and
   transaction identifier of a first request node of the data processing network:
      sending a second transfer request to a home node of the data processing network, the second transfer request including the source identifier and
      transaction identifier of the first request node;
   responsive to receiving the second transfer request at the home node:
      sending a third transfer request to a completer node of the data processing network, the third transfer request including the source identifier and
      transaction identifier of the first request node, where the completer node is a subordinate node of the data processing network or a second request node of
      the data processing network;
   responsive to receiving the third transfer request at the completer node:
      sending a response message to the first request node, bypassing the home node and the first intermediate cache node, the response message including the transaction identifier of the first request node and, as a target identifier, the source identifier of the first request node; and
      routing the response message in the interconnect based on the source identifier of the first request node as a target identifier.
12. The method of embodiment 11, where the second transfer request includes a source identifier and transaction identifier of the first intermediate cache node and the third transfer request includes a source identifier and transaction identifier of the home node, the method further comprising:
   sending, by the completer node, an acknowledgement message to the home node,
   acknowledgement message including the transaction identifier of the home node; and
   sending, by the home node, an acknowledgement message to the intermediate cache node, the acknowledgement message including the transaction identifier of the first intermediate cache node.
13. The method of embodiment 11, further comprising sending, by the first request node, the first transfer request to the first intermediate cache node.
14. The method of embodiment 11, further comprising sending, by a second intermediate cache node of the data processing network, the first transfer request to the first intermediate cache node.
15. The method of embodiment 11, where:
   the first transfer request is a direct read request for data associated with an address, and
   the response message includes data associated with the address.
16. The method of embodiment 11, where the first transfer request is a direct read transfer request and the completer node is the subordinate node.
17. The method of embodiment 11, where the first transfer request is a direct cache transfer request and the completer node is the second request node.
18. The method of embodiment 17, further comprising:
   the first request node initiating the direct transfer of data by sending an initial direct cache transfer request to an initial intermediate cache node of the one or more intermediate cache nodes; and
   the first request node, responsive to receiving the response message, sending a completion acknowledgement message to the initial intermediate node, the completion acknowledgement message including a transaction identifier of the initial intermediate node and, as a target identifier, a source identifier of the initial intermediate node;
   where the second and third transfer requests and the response message include the source identifier and the transaction identifier of the initial intermediate node.
19. The method of embodiment 11, where:
   the first transfer request is a direct write transfer request for data associated with an address;
   the completer node is the subordinate node; and
   the response message signals availability of the subordinate node to receive the data associated with the address.
20. The method of embodiment 11, where the second transfer request is a direct read transfer request and the third transfer request is a direct cache transfer to the second request node, the method further comprising:
   a first intermediate node adding a node identifier and a transaction identifier for completion to the second transfer request;
   the home node identifying the second request node from a snoop filter and adding the node identifier and transaction identifier for completion to the third transfer request;
   the second request node adding the node identifier and transaction identifier for completion to the response message; and
   responsive to receiving the response message, the request node sending a completion acknowledgement message to the first intermediate node based on the node identifier and transaction identifier for completion to the second transfer request.

The embodiments described herein are combinable, to include at least:
1. A data processing network comprising a plurality of nodes coupled by an interconnect, the plurality of nodes including:
   one or more request nodes;
   a hierarchy of cache nodes including one or more home nodes and one or more intermediate cache nodes; and
   one or more subordinate nodes;
   where a first request node of the one or more request nodes is operable to initiate a direct transfer of data;
   where a first intermediate cache node of the one or more intermediate cache nodes is configured to:
      receive a first transfer request for the direct transfer of data, the first transfer request including a source identifier and transaction identifier of the first request node; and
      send a second transfer request to a home node of the one or more home nodes, the second transfer request including the source identifier and transaction identifier of the first request node;
      where the home node is configured to:
         receive the second transfer request; and
         send a third transfer request to a completer node, the third transfer request including the source identifier and transaction identifier of the first request node, where the completer node is a subordinate node of the one or more subordinate nodes or a second request node of the plurality of request nodes;
         where the completer node is configured to:
            send a response message, responsive to the third transfer request, to the first request node, bypassing the home node and the first intermediate cache node, the response message including the transaction identifier of the first request node and, as a target identifier, the source identifier of the first request node; and
            where the response message is routed in the interconnect based on the source identifier of the first request node as the target identifier.
2. The data processing network of embodiment 1, where:
   the third transfer request includes a source identifier and transaction identifier of the home node, and the completer node is configured to send an acknowledgement message to the home node, acknowledgement message including the transaction identifier of the home node; and
   the second transfer request includes a source identifier and transaction identifier of the first intermediate cache node, and the home node is configured to send an acknowledgement message to the intermediate cache node, the acknowledgement message including the transaction identifier of the first intermediate cache node.
3. The data processing network of embodiment 1 or embodiment 2, where the first transfer request is received from the first request node or via one or more second intermediate cache nodes of the data processing network.
4. The data processing network as in any preceding embodiment, where:
   the first transfer request is a direct read transfer request for data associated with an address and the completer node is the subordinate node, or
   the first transfer request is a direct cache transfer request for data associated with an address, and the completer node is the second request node; and
   where the response message includes data associated with the address.
5. The data processing network of embodiment 1, where:
   the first request node is operable to initiate the direct transfer of data by sending an initial direct cache transfer request to an initial intermediate cache node of the one or more intermediate cache nodes; and
   the second and third transfer requests, and the response message, include a source identifier and transaction identifier of the initial intermediate node; and
   the first request node is configured to send a completion acknowledgement message to the initial intermediate node, the completion acknowledgement message including the transaction identifier of the initial intermediate node and, as a target identifier, the source identifier of the initial intermediate node.
6. The data processing network of embodiment 1, where:
   the first transfer request is a direct write transfer request for data associated with an address;
   the completer node is the subordinate node; and
   the response message signals availability of the subordinate node to receive the data associated with the address from the first request node.
7. The data processing network of embodiment 1, where the second transfer request is a direct read transfer request and the third transfer request is a direct cache transfer to the second request node, where:
   the first intermediate node is further configured to add a node identifier and a transaction identifier for completion to the second transfer request;
   the home node is further configured to identify the second request node from a snoop filter and add the node identifier and transaction identifier for completion to the third transfer request;
   the second request node is further configured to add the node identifier and transaction identifier for completion to the response message; and
   the request node is further configured to send a completion acknowledgement message to the first intermediate node based on the node identifier and transaction identifier for completion to the second transfer request in response to receiving the response message.
8. A method of data transfer in a data processing network including a plurality of nodes coupled by an interconnect, the method comprising: responsive to receiving a first transfer request at a first intermediate cache node of the data processing network, the first transfer request including a source identifier and transaction identifier of a first request node of the data processing network:
   sending a second transfer request to a home node of the data processing network, the second transfer request including the source identifier and transaction identifier of the first request node;
   responsive to receiving the second transfer request at the home node:
      sending a third transfer request to a completer node of the data processing network, the third transfer request including the source identifier and transaction identifier of the first request node, where the completer node is a subordinate node of the data processing network or a second request node of the data processing network;
      responsive to receiving the third transfer request at the completer node:
         sending a response message to the first request node, bypassing the home node and the first intermediate cache node, the response message including the transaction identifier of the first request node and, as a target identifier, the source identifier of the first request node; and
         routing the response message in the interconnect based on the source identifier of the first request node as a target identifier.
9. The method of embodiment 8, where the second transfer request includes a source identifier and transaction identifier of the first intermediate cache node and the third transfer request includes a source identifier and transaction identifier of the home node, the method further comprising:
   sending, by the completer node, an acknowledgement message to the home node, acknowledgement message including the transaction identifier of the home node; and
   sending, by the home node, an acknowledgement message to the intermediate cache node, the acknowledgement message including the transaction identifier of the first intermediate cache node.
10. The method of embodiment 8 or embodiment 9, further comprising sending, by the first request node, the first transfer request to the first intermediate cache node, or
   further comprising sending, by a second intermediate cache node of the data processing network, the first transfer request to the first intermediate cache node.
11. The method of any of embodiments 8 to 10, where:
   the first transfer request is a direct read transfer request for data associated with an address and the completer node is the subordinate node; or
   the first transfer request is a direct cache transfer request for data associated with an address and the completer node is the second request node; and
   where and the response message includes data associated with the address.
12. The method of embodiment 11, further comprising:
   the first request node initiating the direct transfer of data by sending an initial direct cache transfer request to an initial intermediate cache node of the one or more intermediate cache nodes; and
   the first request node, responsive to receiving the response message, sending a completion acknowledgement message to the initial intermediate node, the completion acknowledgement message including a transaction identifier of the initial intermediate node and, as a target identifier, a source identifier of the initial intermediate node;
   where the second and third transfer requests and the response message include the source identifier and the transaction identifier of the initial intermediate node.
13. The method of embodiment 8 or embodiment 9, where:
   the first transfer request is a direct write transfer request for data associated with an address;
   the completer node is the subordinate node; and
   the response message signals availability of the subordinate node to receive the data associated with the address.
14. The method of embodiment 8, where the second transfer request is a direct read transfer request and the third transfer request is a direct cache transfer to the second request node, the method further comprising:
   a first intermediate node adding a node identifier and a transaction identifier for completion to the second transfer request;
   the home node identifying the second request node from a snoop filter and adding the node identifier and transaction identifier for completion to the third transfer request;
   the second request node adding the node identifier and transaction identifier for completion to the response message; and
   responsive to receiving the response message, the request node sending a completion acknowledgement message to the first intermediate node based on the node identifier and transaction identifier for completion to the second transfer request.
15. A data processing network comprising:
   one or more cache nodes of a hierarchy of cache nodes;
   where a first cache node of the one or more cache nodes is configured to:
      receive a first transfer request for a direct transfer of data from a first request node of the data processing network, the first transfer request including a source identifier and transaction identifier of the first request node; and
      send a second transfer request to a second cache node of the hierarchy of cache nodes, the second transfer request including the source identifier and transaction identifier of the first request node.
16. The data processing network of embodiment 15, where the first cache node is a home node, and the second cache node is an intermediate node, or where the first cache node is an intermediate node, and the second cache node is a home node.
17. The data processing network of any preceding embodiment, where the second cache node is configured to:
   receive the second transfer request; and
   send a third transfer request to a completer node of the data processing network, the third transfer request including the source identifier and transaction identifier of the first request node, where the completer node of the data processing network or a second request node of the data processing network.
18. The data processing network of any preceding embodiment, further comprising the completer node, where the completer node is configured to:
   send a response message, responsive to the third transfer request, to the first request node, bypassing the first cache node and the second cache node, the response message including the transaction identifier of the first request node and, as a target identifier, the source identifier of the first request node; and
   where the response message is routed based on the source identifier of the first request node as the target identifier.

While this present disclosure is susceptible of embodiment in many different forms, there are shown in the drawings, and will herein be described in detail, specific embodiments, with the understanding that the embodiments shown and described herein should be considered as providing examples of the principles of the present disclosure and are not intended to limit the present disclosure to the specific embodiments shown and described. In the description below, like reference numerals are used to describe the same, similar or corresponding parts in the several views of the drawings. For simplicity and clarity of illustration, reference numerals may be repeated among the figures to indicate corresponding or analogous elements.

In this document, relational terms such as first and second, top and bottom, and the like may be used solely to distinguish one entity or action from another entity or action without necessarily requiring or implying any actual such relationship or order between such entities or actions. The terms "comprises," "comprising," "includes," "including," "has," "having," or any other variations thereof, are intended to cover a non-exclusive inclusion, such that a process, method, article, or apparatus that comprises a list of elements does not include only those elements but may include other elements not expressly listed or inherent to such process, method, article, or apparatus. An element preceded by "comprises ... a" does not, without more constraints, preclude the existence of additional identical elements in the process, method, article, or apparatus that comprises the element.

Reference throughout this document to "one embodiment," "certain embodiments," "an embodiment," "implementation(s)," "aspect(s)," or similar terms means that a particular feature, structure, or characteristic described in connection with the embodiment is included in at least one embodiment of the present disclosure. Thus, the appearances of such phrases or in various places throughout this specification are not necessarily all referring to the same embodiment. Furthermore, the particular features, structures, or characteristics may be combined in any suitable manner in one or more embodiments without limitation.

The term "or," as used herein, is to be interpreted as an inclusive or meaning any one or any combination. Therefore, "A, B or C" means "any of the following: A; B; C; A and B; A and C; B and C; A, B and C." An exception to this definition will occur only when a combination of elements, functions, steps or acts are in some way inherently mutually exclusive.

As used herein, the term "configured to," when applied to an element, means that the element may be designed or constructed to perform a designated function, or that is has the required structure to enable it to be reconfigured or adapted to perform that function.

Numerous details have been set forth to provide an understanding of the embodiments described herein. The embodiments may be practiced without these details. In other instances, well-known methods, procedures, and components have not been described in detail to avoid obscuring the embodiments described. The disclosure is not to be considered as limited to the scope of the embodiments described herein.

Those skilled in the art will recognize that the present disclosure has been described by means of examples. The present disclosure could be implemented using hardware component equivalents such as special purpose hardware and/or dedicated processors which are equivalents to the present disclosure as described and claimed. Similarly, dedicated processors and/or dedicated hard wired logic may be used to construct alternative equivalent embodiments of the present disclosure.

Dedicated or reconfigurable hardware components used to implement the disclosed mechanisms may be described, for example, by instructions of a hardware description language (HDL), such as VHDL, Verilog or RTL (Register Transfer Language), or by a netlist of components and connectivity. The instructions may be at a functional level or a logical level or a combination thereof. The instructions or netlist may be input to an automated design or fabrication process (sometimes referred to as high-level synthesis) that interprets the instructions and creates digital hardware that implements the described functionality or logic.

The HDL instructions or the netlist may be stored on non-transitory computer readable medium such as Electrically Erasable Programmable Read Only Memory (EEPROM); non-volatile memory (NVM); mass storage such as a hard disc drive, floppy disc drive, optical disc drive; optical storage elements, magnetic storage elements, magnetooptical storage elements, flash memory, core memory and/or other equivalent storage technologies without departing from the present disclosure. Such alternative storage devices should be considered equivalents.

Concepts described herein may be embodied in computer-readable code for fabrication of an apparatus that embodies the described concepts. For example, the computer-readable code can be used at one or more stages of a semiconductor design and fabrication process, including an electronic design automation (EDA) stage, to fabricate an integrated circuit comprising the apparatus embodying the concepts. The above computer-readable code may additionally or alternatively enable the definition, modelling, simulation, verification and/or testing of an apparatus embodying the concepts described herein.

For example, the computer-readable code for fabrication of an apparatus embodying the concepts described herein can be embodied in code defining a hardware description language (HDL) representation of the concepts. For example, the code may define a register-transfer-level (RTL) abstraction of one or more logic circuits for defining an apparatus embodying the concepts. The code may define an HDL representation of the one or more logic circuits embodying the apparatus in Verilog, SystemVerilog, Chisel, or VHDL (Very High-Speed Integrated Circuit Hardware Description Language) as well as intermediate representations such as FIRRTL. Computer-readable code may provide definitions embodying the concept using system-level modelling languages such as SystemC and SystemVerilog or other behavioral representations of the concepts that can be interpreted by a computer to enable simulation, functional and/or formal verification, and testing of the concepts.

Additionally, or alternatively, the computer-readable code may define a low-level description of integrated circuit components that embody concepts described herein, such as one or more netlists or integrated circuit layout definitions, including representations such as GDSII. The one or more netlists or other computer-readable representation of integrated circuit components may be generated by applying one or more logic synthesis processes to an RTL representation to generate definitions for use in fabrication of an apparatus embodying the invention. Alternatively, or additionally, the one or more logic synthesis processes can generate from the computer-readable code a bitstream to be loaded into a field programmable gate array (FPGA) to configure the FPGA to embody the described concepts. The FPGA may be deployed for the purposes of verification and test of the concepts prior to fabrication in an integrated circuit or the FPGA may be deployed in a product directly.

The computer-readable code may comprise a mix of code representations for fabrication of an apparatus, for example including a mix of one or more of an RTL representation, a netlist representation, or another computer-readable definition to be used in a semiconductor design and fabrication process to fabricate an apparatus embodying the invention. Alternatively, or additionally, the concept may be defined in a combination of a computer-readable definition to be used in a semiconductor design and fabrication process to fabricate an apparatus and computer-readable code defining instructions which are to be executed by the defined apparatus once fabricated.

Such computer-readable code can be disposed in any known transitory computer-readable medium (such as wired or wireless transmission of code over a network) or non-transitory computer-readable medium such as semiconductor, magnetic disk, or optical disc. An integrated circuit fabricated using the computer-readable code may comprise components such as one or more of a central processing unit, graphics processing unit, neural processing unit, digital signal processor or other components that individually or collectively embody the concept.

Various embodiments described herein are implemented using dedicated hardware, configurable hardware or programmed processors executing programming instructions that are broadly described in flow chart form that can be stored on any suitable electronic storage medium or transmitted over any suitable electronic communication medium. A combination of these elements may be used. Those skilled in the art will appreciate that the processes and mechanisms described above can be implemented in any number of variations without departing from the present disclosure. For example, the order of certain operations carried out can often be varied, additional operations can be added, or operations can be deleted, without departing from the present disclosure. Such variations are contemplated and considered equivalent.

The various representative embodiments, which have been described in detail herein, have been presented by way of example and not by way of limitation. It will be understood by those skilled in the art that various changes may be made in the form and details of the described embodiments resulting in equivalent embodiments that remain within the scope of the appended claims.

## Claims

1. A data processing network comprising a plurality of nodes coupled by an interconnect, the plurality of nodes including:
one or more request nodes;
a hierarchy of cache nodes including one or more home nodes and one or more intermediate cache nodes; and
one or more subordinate nodes;
where a first request node of the one or more request nodes is operable to initiate a direct transfer of data;
where a first intermediate cache node of the one or more intermediate cache nodes is configured to:
receive a first transfer request for the direct transfer of data, the first transfer request including a source identifier and transaction identifier of the first request node; and
send a second transfer request to a home node of the one or more home nodes, the second transfer request including the source identifier and transaction identifier of the
first request node;
where the home node is configured to:
receive the second transfer request; and
send a third transfer request to a completer node, the third transfer request including the source identifier and transaction identifier of the first request node, where the completer node is a subordinate node of the one or more subordinate nodes or a second request node of the plurality of request nodes;
where the completer node is configured to:
send a response message, responsive to the third transfer request, to the first request node, bypassing the home node and the first intermediate cache node, the response message including the transaction identifier of the first request node and, as a target
identifier, the source identifier of the first request node; and
where the response message is routed in the interconnect based on the source identifier of the first request node as the target identifier.

2. The data processing network of claim 1, where:
the third transfer request includes a source identifier and transaction identifier of the home node, and the completer node is configured to send an acknowledgement message to the home node, acknowledgement message including the transaction identifier of the home node; and
the second transfer request includes a source identifier and transaction identifier of the first intermediate cache node, and the home node is configured to send an acknowledgement message to the intermediate cache node, the acknowledgement message including the transaction identifier of the first intermediate cache node.

3. The data processing network of claim 1 or claim 2, where the first transfer request is received from the first request node or via one or more second intermediate cache nodes of the data processing network.

4. The data processing network as in any preceding claim, where:
the first transfer request is a direct read transfer request for data associated with an address and the completer node is the subordinate node, or
the first transfer request is a direct cache transfer request for data associated with an
address, and the completer node is the second request node; and
where the response message includes data associated with the address.

5. The data processing network of claim 1, where:
the first request node is operable to initiate the direct transfer of data by sending an initial direct cache transfer request to an initial intermediate cache node of the one or
more intermediate cache nodes; and
the second and third transfer requests, and the response message, include a source identifier and transaction identifier of the initial intermediate node; and
the first request node is configured to send a completion acknowledgement message to the initial intermediate node, the completion acknowledgement message including the transaction identifier of the initial intermediate node and, as a target identifier, the source identifier of the initial intermediate node.

6. The data processing network of claim 1, where:
the first transfer request is a direct write transfer request for data associated with an address;
the completer node is the subordinate node; and
the response message signals availability of the subordinate node to receive the data associated with the address from the first request node.

7. The data processing network of claim 1, where the second transfer request is a direct read transfer request and the third transfer request is a direct cache transfer to the second request node, where:
the first intermediate node is further configured to add a node identifier and a transaction identifier for completion to the second transfer request;
the home node is further configured to identify the second request node from a snoop filter and add the node identifier and transaction identifier for completion to the third transfer request;
the second request node is further configured to add the node identifier and
transaction identifier for completion to the response message; and
the request node is further configured to send a completion acknowledgement message to the first intermediate node based on the node identifier and transaction identifier for completion to the second transfer request in response to receiving the response message.

8. A method of data transfer in a data processing network including a plurality of nodes coupled by an interconnect, the method comprising:
responsive to receiving a first transfer request at a first intermediate cache node of the data processing network, the first transfer request including a source identifier and
transaction identifier of a first request node of the data processing network:
sending a second transfer request to a home node of the data processing network, the second transfer request including the source identifier and
transaction identifier of the first request node;
responsive to receiving the second transfer request at the home node:
sending a third transfer request to a completer node of the data processing network, the third transfer request including the source identifier and transaction identifier of the first request node, where the completer node is a subordinate node of the data processing network or a second request node of
the data processing network;
responsive to receiving the third transfer request at the completer node:
sending a response message to the first request node, bypassing the home node and the first intermediate cache node, the response message including the transaction identifier of the first request node and, as a target identifier, the
source identifier of the first request node; and
routing the response message in the interconnect based on the source identifier of the first request node as a target identifier.

9. The method of claim 8, where the second transfer request includes a source identifier and transaction identifier of the first intermediate cache node and the third transfer request includes a source identifier and transaction identifier of the home node, the method further comprising:
sending, by the completer node, an acknowledgement message to the home node,
acknowledgement message including the transaction identifier of the home node; and
sending, by the home node, an acknowledgement message to the intermediate cache node, the acknowledgement message including the transaction identifier of the first intermediate cache node.

10. The method of claim 8 or claim 9, further comprising sending, by the first request node,
the first transfer request to the first intermediate cache node, or
further comprising sending, by a second intermediate cache node of the data processing network, the first transfer request to the first intermediate cache node.

11. The method of any of claims 8 to 10, where:
the first transfer request is a direct read transfer request for data associated with an address and the completer node is the subordinate node; or
the first transfer request is a direct cache transfer request for data associated with an
address and the completer node is the second request node; and
where and the response message includes data associated with the address.

12. The method of claim 11, further comprising:
the first request node initiating the direct transfer of data by sending an initial direct cache transfer request to an initial intermediate cache node of the one or more intermediate cache nodes; and
the first request node, responsive to receiving the response message, sending a completion acknowledgement message to the initial intermediate node, the completion acknowledgement message including a transaction identifier of the initial intermediate node and, as a target identifier, a source identifier of the initial
intermediate node;
where the second and third transfer requests and the response message include the source identifier and the transaction identifier of the initial intermediate node.

13. The method of claim 8 or claim 9, where:
the first transfer request is a direct write transfer request for data associated with an address;
the completer node is the subordinate node; and
the response message signals availability of the subordinate node to receive the data associated with the address.

14. The method of claim 8, where the second transfer request is a direct read transfer request and the third transfer request is a direct cache transfer to the second request node, the method further comprising:
a first intermediate node adding a node identifier and a transaction identifier for completion to the second transfer request;
the home node identifying the second request node from a snoop filter and adding the node identifier and transaction identifier for completion to the third transfer request;
the second request node adding the node identifier and transaction identifier for completion to the response message; and
responsive to receiving the response message, the request node sending a completion acknowledgement message to the first intermediate node based on the node identifier and transaction identifier for completion to the second transfer request.

15. A data processing network comprising:
one or more cache nodes of a hierarchy of cache nodes;
where a first cache node of the one or more cache nodes is configured to:
receive a first transfer request for a direct transfer of data from a first request node of the data processing network, the first transfer request including a source identifier and
transaction identifier of the first request node; and
send a second transfer request to a second cache node of the hierarchy of cache nodes, the second transfer request including the source identifier and transaction identifier of the first request node.

16. The data processing network of claim 15, where the first cache node is a home node, and the second cache node is an intermediate node, or where the first cache node is an intermediate node, and the second cache node is a home node.

17. The data processing network of any preceding claim, where the second cache node is configured to:
receive the second transfer request; and
send a third transfer request to a completer node of the data processing network, the third transfer request including the source identifier and transaction identifier of the first request node, where the completer node of the data processing network or a second request node of the data processing network.

18. The data processing network of any preceding claim, further comprising the completer node, where the completer node is configured to:
send a response message, responsive to the third transfer request, to the first request node, bypassing the first cache node and the second cache node, the response message including the transaction identifier of the first request node and, as a target identifier,
the source identifier of the first request node; and
where the response message is routed based on the source identifier of the first request node as the target identifier.
